# EUROPÄISCHE PATENTSCHRIFT

(11) **EP 1 570 723 B1**
(45) Veröffentlichungstag und Bekanntmachung des Hinweises auf die Patenterteilung: **24.10.2007**
(21) Anmeldenummer: 05101578.2
(22) Anmeldetag: 02.03.2005
(51) Int. Cl.: A01D 41/127

(54) **Austrageinrichtung mit einer Messeinrichtung**
Discharging device with measuring apparatus
Dispositif de décharge avec appareil de mesure

(30) Priorität: 05.03.2004 DE 102004010772
(43) Veröffentlichungstag der Anmeldung: 07.09.2005
(73) Patentinhaber: DEERE & COMPANY, Moline, Illinois 61265-8098 (US)
(72) Erfinder: Kormann, Georg, 66424, Homburg (DE); Hettiger, Marcus, 66115, Saarbrücken (DE); Pellegrini, Eric, 57600, Forbach (FR); Clauss,Steffen, 66509, Rieschweiler-Mühlbach (DE); Flohr, Werner, 67633, Kaiserslautern (DE)
(74) Vertreter: Holst, Sönke

(56) Entgegenhaltungen:
- EP-A- 1 053 671
- US-A1- 2005 085 283

## Beschreibung

Die Erfindung betrifft eine Austrageinrichtung einer landwirtschaftlichen Erntemaschine, mit einer Halterungsanordnung, durch die eine in einem Gehäuse angeordnete, zur Erfassung von Eigenschaften des Ernteguts eingerichtete Messeinrichtung lösbar an der Austrageinrichtung anbringbar ist.

Zur Analyse von Inhaltsstoffen organischen Materials geeignete Messeinrichtungen umfassen in der Regel mit Licht im Wellenlängenbereich des Nahinfraroten (NIR) arbeitende Sensoren, die mit Lichtquellen und optischen Analysatoren ausgestattet sind. Derartige Sensoren sind relativ aufwändig und teuer.

Derartige Messeinrichtungen sind in der WO 99/46971 A, WO 99/40419 A, WO 00/00818 A und DE 102 36 515 C beschrieben. Sie sind innerhalb des tragenden Aufbaus der Erntemaschine einem Förderkanal benachbart angeordnet, in dem Erntegut gefördert wird. Da die Messeinrichtungen dort relativ gut gegen Umgebungseinflüsse geschützt angeordnet sind, erübrigen sich stabilere Schutzgehäuse zum Schutz gegen Umgebungseinflüsse.

In der EP 1 053 671 A wird eine derartige Messeinrichtung beschrieben, die an einer landwirtschaftlichen Erntemaschine angebracht ist. Das Erntegut strömt an der Messeinrichtung vorbei und wird durch die Messeinrichtung hinsichtlich bestimmter Eigenschaften untersucht, wie Feuchtigkeitsgehalt oder des Gehalts an organischen Inhaltsstoffen. In einer Ausführungsform ist die Messeinrichtung an der Austrageinrichtung einer Erntemaschine befestigt. Die Messeinrichtung kann demontiert werden, um sie an einer anderen Erntemaschine zu verwenden. Eine ähnliche, abnehmbare Messeinrichtung zeigt die nachveröffentlichte DE 103 48 040 A. Hier ist als nachteilig anzusehen, dass die Messeinrichtung, wenn sie an der Austrageinrichtung angebracht ist, direkt den Umgebungseinflüssen ausgesetzt ist. In ungünstigen Fällen, beispielsweise beim Unterfahren von Bäumen am Feldrand, kann die Messeinrichtung auch beschädigt werden.

Das der Erfindung zu Grunde liegende Problem wird darin gesehen, die geschilderten Nachteile zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, an der Außenseite der Austrageinrichtung eine Halterungsanordnung anzubringen. An der Halterungsanordnung wird die in einem Gehäuse angeordnete Messeinrichtung abnehmbar angebracht, so dass die Messeinrichtung im montierten Zustand an der Austrageinrichtung positioniert ist. Die Halterungsanordnung ist mit einer Abdeckeinrichtung ausgestattet, die dazu dient, die von der Austrageinrichtung beabstandete, äußere Fläche des Gehäuses zu überdecken. Das Gehäuse der Messeinrichtung befindet sich somit im angebrachten Zustand zwischen der Abdeckeinrichtung und der Austrageinrichtung.

Auf diese Weise erreicht man durch die Abdeckeinrichtung einen zusätzlichen Schutz der Messeinrichtung. Sie wird gegen Umwelteinflüsse, wie direktes Sonnenlicht, Niederschlag und gegen mechanische Einflüsse geschützt. Eine unerwünschte Erwärmung oder Beschädigung der Messeinrichtung ist somit nicht zu befürchten.

Es wäre prinzipiell denkbar, die Abdeckeinrichtung starr mit der Austrageinrichtung zu verbinden. Die Abdeckeinrichtung könnte beispielsweise u-förmig sein, so dass die Messeinrichtung in sie hineinschiebbar ist. Es ist dann jedoch nur ein eingeschränkter Zugang zu dem Bereich der Austrageinrichtung unterhalb der Abdeckeinrichtung möglich, so dass dort angeordnete Fenster oder dgl. schlecht zu reinigen wären. In einer bevorzugten Ausführungsform der Erfindung ist die Abdeckeinrichtung daher zwischen einer ersten Position, in der sie die Austrageinrichtung in dem Bereich abdeckt, in dem die Messeinrichtung Aufnahme finden kann, und einer zweiten Position beweglich, in der sie den genannten Bereich der Austrageinrichtung nicht überdeckt. Dadurch erhält man einen besseren Zugang zum genannten Bereich der Austrageinrichtung.

Das Gehäuse der Messeinrichtung kann an der Abdeckeinrichtung fixiert werden, so dass die Messeinrichtung gemeinsam mit der Abdeckeinrichtung zwischen der ersten und zweiten Position bewegbar ist. In der zweiten Position besteht eine gute Zugangsmöglichkeit zur Messeinrichtung, um sie beispielsweise reinigen, warten oder überprüfen zu können. Da die Messeinrichtung an der Abdeckeinrichtung (lösbar) fixiert ist, besteht - anders, als wenn die Messeinrichtung von einem Bediener in der Hand zu halten wäre - keine Gefahr, dass sie herunterfallen könnte. Es wäre aber auch denkbar, das Gehäuse der Messeinrichtung an der Austrageinrichtung oder an sich nicht mit der Abdeckeinrichtung bewegenden, mit der Austrageinrichtung starr verbundenen Teilen der Halterungsanordnung zu befestigen.

In einer bevorzugten Ausführungsform ist die Abdeckeinrichtung schwenkbar an der Austrageinrichtung angelenkt. Die Schwenkachse kann in Längsrichtung der Austrageinrichtung oder quer dazu verlaufen. Alternativ wäre auch eine verschiebbare Anbringung der Abdeckeinrichtung an der Austrageinrichtung denkbar.

Die Messeinrichtung arbeitet vorzugsweise optisch, beispielsweise im nahen Infrarot. Es ist daher angebracht, eine Öffnung in der Austrageinrichtung vorzusehen, durch die hindurch die Messeinrichtung mit dem zu untersuchenden Erntegut zusammenwirken kann. Um die Messeinrichtung vor eindringendem Erntegut zu schützen, bietet sich die Anbringung einer Scheibe aus geeignetem, transparentem Material in der Öffnung an. Diese Scheibe verhindert auch dann einen Austritt von Erntegut aus der Öffnung, wenn die Messeinrichtung abgenommen ist. Die Scheibe kann durch eine Buchse fixiert werden, die sich zwischen der Scheibe und dem Rand der Öffnung der Austrageinrichtung befindet. Zur Abdichtung gegenüber Streu- und Umgebungslicht ist die Verwendung einer Dichtung zwischen der Messeinrichtung und der Buchse vorgeschlagen. Die Buchse mit der Scheibe kann herausnehmbar sein, damit ein unnötiger Verschleiß der Scheibe vermieden werden kann.

Schließlich wird vorgeschlagen, das Gehäuse der Messeinrichtung verstellbar an der Halterungsanordnung anzubringen. Dadurch kann die Messeinrichtung in eine optimale Position verbracht werden.

In den Zeichnungen ist ein nachfolgend näher beschriebenes Ausführungsbeispiel der Erfindung dargestellt. Es zeigt:
- Fig. 1: eine Erntemaschine mit einer Messeinrichtung in Seitenansicht und in schematischer Darstellung,
- Fig. 2: eine perspektivische Darstellung eines Abschnitts der Austrageinrichtung der Erntemaschine mit einer Halteeinrichtung und einer daran angebrachten Messeinrichtung in einer ausgeschwenkten Position,
- Fig. 3: eine Darstellung der Austrageinrichtung aus Figur 2 bei einer in die Arbeitsposition verbrachten Messeinrichtung, und
- Fig. 4: einen Schnitt durch eine Buchse mit einer Scheibe und zwei Dichtungen.

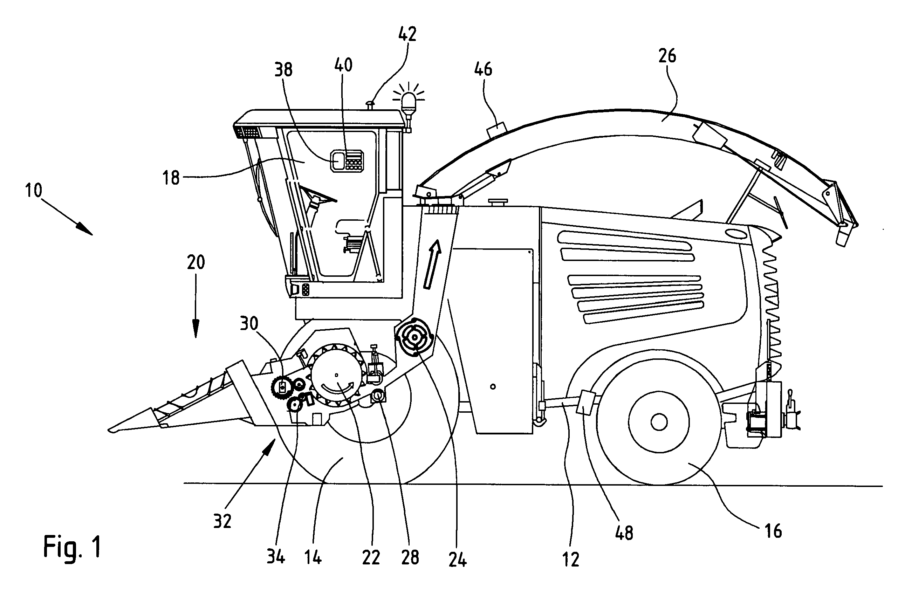

Eine in der Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein Maisgebiss ist, vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

An der in Figur 1 dargestellten Erntemaschine 10 sind einige Sensoren zur Messung des Flusses des die Erntemaschine 10 pro Zeiteinheit durchströmenden Erntegutes, des so genannten Durchsatzes, vorgesehen. Ein erster Durchsatzsensor 30 misst den Abstand zwischen zwei Vorpresswalzen 32, die zwischen der Erntegutaufnahmevorrichtung 20 und der Häckseltrommel 22 angeordnet sind, und zwischen denen das Erntegut hindurchgefördert wird, mittels eines von der federnd aufgehängten Vorpresswalze 32 betätigten Schiebe- oder Drehwiderstandes (Potentiometer). Weiterhin wird die Drehzahl einer der Vorpresswalzen 32 mittels eines zweiten Sensors 34 gemessen. Außerdem können Sensoren das Antriebsdrehmoment der Fördervorrichtung 24 sowie der Nachzerkleinerungseinrichtung 28 messen.

Ein mit einer Anzeigeeinrichtung 38 verbundener Bordcomputer 40 dient zur Aufzeichnung und Auswertung der gemessenen Daten.

Um einen Ertrag zu errechnen, werden außerdem Informationen über die aktuelle Fahrgeschwindigkeit und Arbeitsbreite benötigt. Die Fahrgeschwindigkeit kann aus den Daten der Vortriebseinrichtungen der Erntemaschine 10 entnommen oder über einen Radarsensor 48 erfasst werden. Mittels eines GPS- (Global Positioning System) Sensors 42 zur Erfassung der aktuellen Position kann der Ertrag mittels des Bordcomputers 40 teilflächenspezifisch kartiert werden.

Erfindungsgemäß ist eine Messeinrichtung 46 zur Messung bestimmter Inhaltsstoffe des Erntegutes an der Austrageinrichtung 26 angeordnet. Sie bestimmt im Betrieb den prozentualen Anteil dieser Inhaltsstoffe im Erntegut und arbeitet optisch im Reflexionsbetrieb im sichtbaren Bereich und/oder nahen Infrarotbereich. Am Bordcomputer 40 können damit Wasser-, Rohprotein-, Fettgehalt etc. des Erntegutes georeferenziert abgespeichert und durch die Anzeigeeinrichtung 38 angezeigt werden. Die Messeinrichtung 46 ist außerdem eingerichtet, weitere Parameter des Erntegutes zu erfassen, nämlich die Faserlänge, den Fasergehalt und den Gehalt an Trockensubstanz.

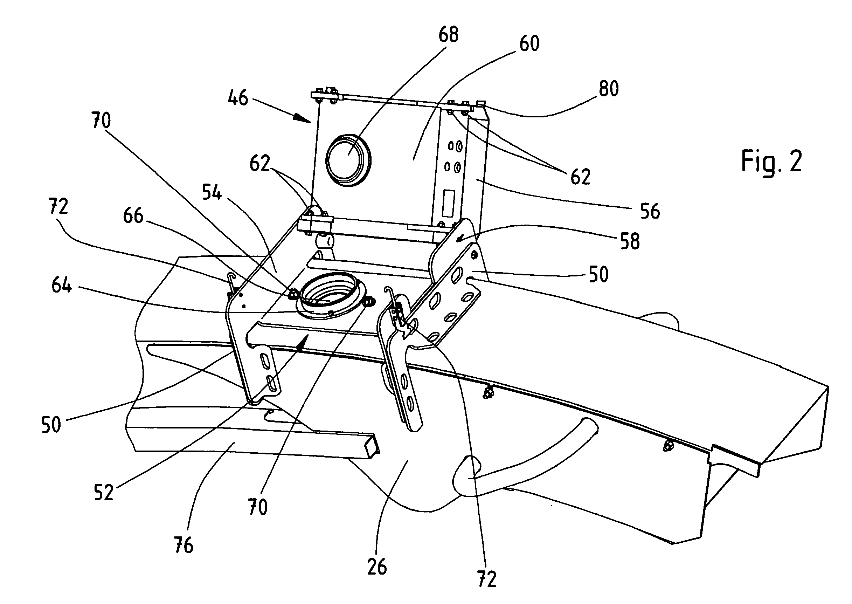

Die Anbringung der Messeinrichtung 46 am Austragsschacht 26 ist in der Figur 2 detaillierter dargestellt. An der Austrageinrichtung 26 sind zwei in Längsrichtung der Austrageinrichtung 26 beabstandete Konsolen 50 angeschweißt. Zwischen den Konsolen 50 ist eine Halteeinrichtung 52 befestigt. Sie setzt sich aus einem mit den Konsolen 50 verschweißten Halteteil 54, das sich parallel zur benachbarten Fläche der Austrageinrichtung 26 erstreckt, und einer schwenkbar am Halteteil 54 angelenkten Abdeckeinrichtung 56 zusammen, die in der Figur 2 in ihrer ausgeschwenkten (im Folgenden: zweiten) Position dargestellt ist. Das Halteteil 54 ist zusätzlich mit Schenkeln mit Langlöchern versehen, an denen sie mit der Außenwand der Austrageinrichtung 26 verschweißt ist. Die Schwenkachse 58 der Abdeckeinrichtung 56 erstreckt sich entlang der Längsrichtung der Austrageinrichtung 26. Es sind auch beliebige andere Befestigungen des Halteteils 54 an der Austrageinrichtung 26 möglich.

Die Abdeckeinrichtung 56 hat in der in Figur 2 dargestellten Position einen Querschnitt mit der Form eines umgedrehten U. Zwischen ihren seitlichen Schenkeln ist ein Gehäuse 60 angeordnet, das die Messeinrichtung 46 enthält. Das Gehäuse 60 ist durch insgesamt acht Schrauben 62 lösbar an den seitlichen Schenkeln der Abdeckeinrichtung 56 fixiert. Die Schrauben 62 erstrecken sich durch Langlöcher in mit dem Gehäuse verbundenen Halterungen, die eine Feinjustierung der Position des Gehäuses 60 an der Austrageinrichtung 26 erlauben.

An der Oberseite der Austrageinrichtung 26 ist eine Öffnung vorgesehen, die mit einer Öffnung in dem Halteteil 54 deckungsgleich ist. In diesen Öffnungen ist eine kreisförmige Buchse 64 angeordnet, in deren Mitte eine Scheibe 66 eingeklebt ist, die vorzugsweise aus Saphirglas besteht. Die Buchse 64 ist an ihrer Unterseite, die im Erntegut führenden Innenraum der Austrageinrichtung 26 angeordnet ist, mit einer Keramikbeschichtung ausgestattet, um den durch Abrieb bedingten Verschleiß der Buchse 64 durch Erntegut zu vermindern. Die Scheibe 66 ist in dem von der Messeinrichtung 46 verwendeten Wellenbereich transparent. Eine Sensorfläche 68 ist derart an der Messeinrichtung 46 angeordnet, dass sie zentrisch zur Scheibe 66 angeordnet ist, wenn die Abdeckeinrichtung 56 mit der Messeinrichtung 46 in eine geschlossene (im Folgenden: erste) Position verschwenkt wird. Die zentrische Positionierung der Sensorfläche 68 wird durch einen trichterförmigen Abschnitt 78 an der Innenseite der Buchse 64 begünstigt. Es können auch weitere Mittel zur Ausrichtung der Messeinrichtung 46 an der Austrageinrichtung 26 bzw. dem Halteteil 54 vorgesehen sein, z. B. mit Öffnungen zusammenwirkende Stifte oder dergleichen.

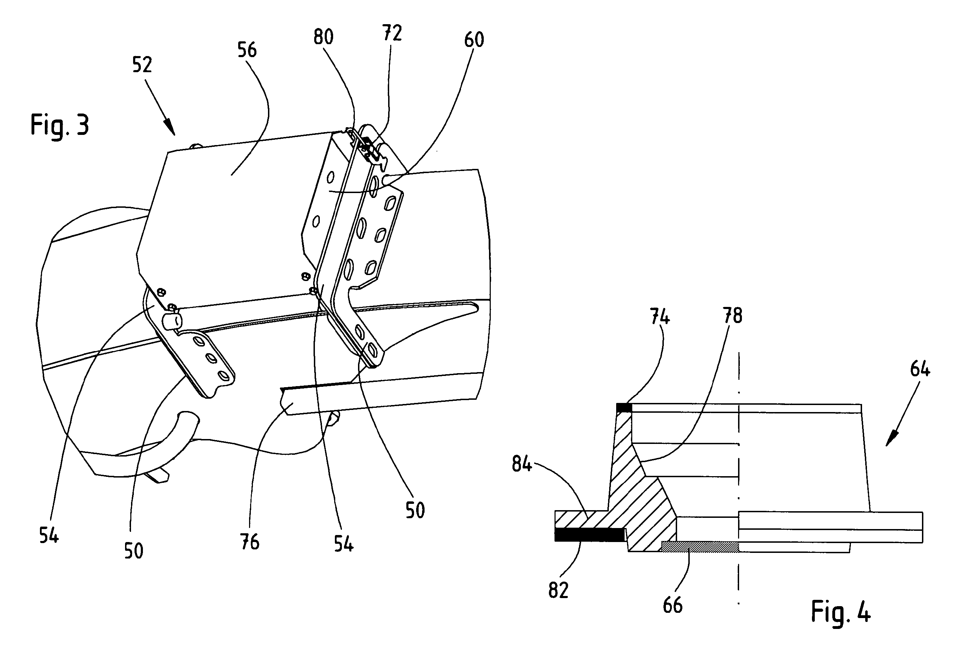

Das Halteteil 54 ist durch Schrauben 70 mit einem an der Innenseite der Austrageinrichtung 26 angeordneten Verschleißblech verbunden, das sich an der Innenseite des in Figur 2 oben eingezeichneten Deckblechs der Austrageinrichtung 26 befindet. Die Schrauben 70 erlauben ein Heranziehen des Verschleißblechs an das Deckblech der Austrageinrichtung 26. Das Verschleißblech hat eine Öffnung, die mit den Öffnungen im Deckblech der Austrageinrichtung 26 und im Halteteil 54 deckungsgleich ist. In einer anderen Ausführungsform wird die in den Figuren 2 und 3 obenseitig eingezeichnete Oberseite der Austrageinrichtung 26 oder ein Teil davon durch das Verschleißblech gebildet; das Deckblech kann somit ganz oder teilweise entfallen. Dann verbinden die Schrauben 70 das Halteteil 54 direkt mit dem Verschleißblech.

An der von der Drehachse 58 beabstandeten Seite des Halteteils 54 befinden sich Endlagensperrriegel 72, mit denen die Abdeckeinrichtung 56 in der ersten Position fixiert werden kann.

In der Figur 3 ist der Bereich der Austrageinrichtung 26 mit einer in die erste, geschlossene Position verbrachten Abdeckeinrichtung 56 gezeigt. Die Abdeckeinrichtung 56 ist durch die Endlagensperrriegel 72, die zugeordnete überstehende Bereiche 80 an der Abdeckeinrichtung 56 umgreifen, in ihrer Position festgelegt. Die Sensorfläche 68 der Messeinrichtung 46 ist zentrisch mit der Buchse 64 ausgerichtet.

Wie anhand der Figur 4 erkennbar ist, befindet sich an der Oberseite der Buchse 64 - und somit zwischen der Buchse 64 und dem Gehäuse 60 der Messeinrichtung 46 eine Dichtung 74, die aus elastischem, nicht lichtdurchlässigem Material besteht und ein Eindringen von Streulicht verhindert. Eine weitere Dichtung 82 befindet sich zwischen der Buchse 64 und der benachbarten Wand der Austrageinrichtung 26. Ein Flansch 84 der Buchse 64, an dem die Dichtung 82 anliegt, ist gegenüber der Scheibe 66 nach oben versetzt, so dass die Scheibe 66 über den Flansch 84 und die benachbarten Bereiche der Austrageinrichtung 26 hinaus in das Innere der Austrageinrichtung 26 hineinragt. Die Buchse 64 wird nur durch die Messeinrichtung 60 an die Austrageinrichtung 26 angedrückt. In der zweiten Position der Abdeckeinrichtung (s. Figur 2) kann daher die Buchse 64 aus der Öffnung in der Austrageinrichtung 26 entnommen werden. In der ersten Position drückt die Messeinrichtung 46 die Buchse 64 gegen die Austrageinrichtung 26, wobei die Dichtungen 74, 82 zusammengedrückt werden.

Innerhalb des Gehäuses 60 der Messeinrichtung 46 ist in an sich bekannter Weise eine Elektronikeinheit vorgesehen, die Schaltelemente zur Stromversorgung der Messeinrichtung 46, zur Auswertung der Messwerte und zur Datenübertragung über ein Bussystem der Erntemaschine 10 umfasst. Die Stromversorgung erfolgt über das Bussystem, dessen in den Figuren nicht dargestellte Leitung durch einen Kabelschacht 76 herangeführt wird. Das Bussystem ist durch eine Steckverbindung mit der Messeinrichtung 64 verbunden. Innerhalb des Gehäuses 60 befindet sich eine Lichtquelle, die Licht nach unten abstrahlt. Das Licht tritt durch die im verwendeten Wellenlängenbereich durchlässige Scheibe 66 in den Austragschacht 26 ein, durch den Erntegut gefördert wird. Vom Erntegut reflektiertes Licht fällt auf einen Detektor im Gehäuse 60 der Messeinrichtung 46. Aus den vom Detektor bereitgestellten Messwerten berechnet die Elektronikeinheit den Gehalt des Ernteguts an bestimmten Inhaltsstoffen, wie Wasser, Stärke, enzymlöslichen organischen Substanzen, nichtorganischen Mineralstoffen, Rohprotein, Öl und dergleichen. Die Messwerte werden über das Bussystem an den Bordcomputer 40 übertragen, der sie ortsabhängig kartiert, und an die Anzeigeeinrichtung 38, auf der sie zur Anzeige gebracht werden können.

Die Abdeckeinrichtung 56 schließt das Gehäuse 60 der Messeinrichtung 46 sandwichartig ein und schützt sie vor Umwelteinflüssen. Die Messeinrichtung 46 erhitzt sich bei Sonneneinstrahlung nicht übermäßig, und sie ist gegenüber Regen und mechanischen Einwirkungen geschützt. Die schwenkbare Anbringung ermöglicht es einem Bediener, nach Lösen der Endlagensperrriegel 72 die Abdeckeinrichtung 56 mit der Messeinrichtung 46 aus der in der Figur 3 dargestellten, ersten Position in die zweite Position zu verbringen, wie sie in der Figur 2 gezeigt ist. Dort ist die Messeinrichtung 46 gut zugänglich, wird aber durch die Abdeckeinrichtung 56 festgehalten, sodass sie nicht versehentlich herabfallen und beim Aufprall auf dem Boden beschädigt werden kann. Nach Lösen der Schrauben 62 und der elektrischen Steckverbindung kann die Messeinrichtung 46 von der Abdeckeinrichtung abgenommen werden, um sie abends oder nach Abschluss der Ernte an einem sicheren und gegen Umwelteinflüsse geschützten Ort verwahren oder an einer anderen Erntemaschine bzw. in einem stationären Einsatz verwenden zu können. Bei abmontierter Messeinrichtung 46 kann die Buchse 64 mit der Scheibe 66 entnommen werden, um einen unnötigen Verschleiß der Scheibe 66 und der Unterseite der Buchse 64 zu vermeiden. Anstelle der Buchse 64 kann dann ein passendes Verschlussstück aus Metall mittels der Schrauben 70 fixiert werden.

## Patentansprüche

1. Austrageinrichtung (26) einer landwirtschaftlichen Erntemaschine (10), mit einer Halterungsanordnung (52), durch die eine in einem Gehäuse (60) angeordnete, zur Erfassung von Eigenschaften des Ernteguts eingerichtete Messeinrichtung (46) lösbar an der Austrageinrichtung (26) anbringbar ist, **dadurch gekennzeichnet, dass** die Halterungsanordnung (52) eine Abdeckeinrichtung (56) umfasst, mit welcher die von der Austrageinrichtung (26) abgewandte Fläche des Gehäuses (60) der Messeinrichtung (46) überdeckbar ist, so dass das Gehäuse (60) der Messeinrichtung (46) zwischen der Abdeckeinrichtung (56) und der Austrageinrichtung (26) anordenbar ist.

2. Austrageinrichtung (26) nach Anspruch 1, **dadurch gekennzeichnet, dass** die Abdeckeinrichtung (56) zwischen einer ersten Position, in der sie Austrageinrichtung (26) und ggf. die dort angeordnete Messeinrichtung (46) überdeckt, und einer zweiten Position bewegbar ist, in sie die Austrageinrichtung (26) nicht überdeckt.

3. Austrageinrichtung (26) nach Anspruch 1 oder 2, **dadurch gekennzeichnet, dass** das Gehäuse der Messeinrichtung (46) an der Abdeckeinrichtung (56) fixierbar ist.

4. Austrageinrichtung (26) nach einem der Ansprüche 1 bis 3, **dadurch gekennzeichnet, dass** die Abdeckeinrichtung (56) schwenkbar an der Austrageinrichtung (26) angelenkt ist.

5. Austrageinrichtung (26) nach einem der Ansprüche 1 bis 4, **dadurch gekennzeichnet, dass** sie mit einer Öffnung ausgestattet ist, durch die hindurch die Messeinrichtung (46) mit in der Austrageinrichtung (26) transportiertem Erntegut zusammenwirken kann, und dass in der Öffnung eine Scheibe (66) angeordnet ist.

6. Austrageinrichtung (26) nach Anspruch 5, **dadurch gekennzeichnet, dass** eine Buchse (64) zwischen der Austrageinrichtung (26) und der Scheibe (66) angeordnet ist.

7. Austrageinrichtung (26) nach Anspruch 5 oder 6, **dadurch gekennzeichnet, dass** zwischen dem Gehäuse (60) der Messeinrichtung (46) und der Buchse (64) eine Dichtung (74) vorgesehen ist.

8. Austrageinrichtung (26) nach Anspruch 6 oder 7, **dadurch gekennzeichnet, dass** die Buchse (64) abnehmbar ist.

9. Austrageinrichtung (26) nach einem der vorhergehenden Ansprüche, **dadurch gekennzeichnet, dass** die Position des Gehäuse (60) der Messeinrichtung (46) in der Halterungsanordnung (52) verstellbar ist.

10. Austrageinrichtung (26) nach einem der vorhergehenden Ansprüche, **dadurch gekennzeichnet, dass** die Messeinrichtung (46) optisch arbeitet.

## Claims

1. Discharge device (26) of an agricultural harvester (10), comprising a mounting arrangement (52) by which a measuring device (46) disposed in a housing (60) and set up to detect characteristics of the harvested crop can be detachably fitted to the discharge device (26), **characterized in that** the mounting arrangement (52) comprises a covering device (56) with which that face of the housing (60) of the measuring device (46) which is facing away from the discharge device (26) can be covered, so that the housing (60) of the measuring device (46) can be disposed between the covering device (56) and the discharge device (26).

2. Discharge device (26) according to Claim 1, **characterized in that** the covering device (56) is movable between a first position, in which it covers the discharge device (26) and, if necessary, the measuring device (46) disposed there, and a second position, in which it does not cover the discharge device (26).

3. Discharge device (26) according to Claim 1 or 2, **characterized in that** the housing of the measuring device (46) is fixable to the covering device (56).

4. Discharge device (26) according to one of Claims 1 to 3, **characterized in that** the covering device (56) is pivotably attached to the discharge device (26).

5. Discharge device (26) according to one of Claims 1 to 4, **characterized in that** it is equipped with an opening through which the measuring device (46) can interact with the harvested crop transported in the discharge device (26), and **in that** a disc (66) is disposed in the opening.

6. Discharge device (26) according to Claim 5, **characterized in that** a bushing (64) is disposed between the discharge device (26) and the disc (66).

7. Discharge device (26) according to Claim 5 or 6, **characterized in that** a seal (74) is provided between the housing (60) of the measuring device (46) and the bushing (64).

8. Discharge device (26) according to Claim 6 or 7, **characterized in that** the bushing (64) is removable.

9. Discharge device (26) according to one of the preceding claims, **characterized in that** the position of the housing (60) of the measuring device (46) in the mounting arrangement (52) is adjustable.

10. Discharge device (26) according to one of the preceding claims, **characterized in that** the measuring device (46) operates optically.

## Revendications

1. Dispositif de déchargement (26) d'une machine de récolte (10) agricole, comportant un système de fixation (52), par lequel un dispositif de mesure (46), qui est destiné à détecter des propriétés de la récolte, peut être monté de manière amovible sur le dispositif de déchargement (26), **caractérisé en ce que** le système de fixation (52) comporte un couvercle (56), qui permet de masquer la surface, opposée au dispositif de déchargement (26), du boîtier (60) du dispositif de mesure (46), de telle sorte que le boîtier (60) du dispositif de mesure (46) peut être agencé entre le couvercle (56) et le dispositif de déchargement (26).

2. Dispositif de déchargement (26) selon la revendication 1, **caractérisé en ce que** le couvercle (56) est mobile entre une première position, dans laquelle il recouvre le dispositif de déchargement (26) et, le cas échéant, le dispositif de mesure (46) agencé à cet emplacement, et une deuxième position, dans laquelle il ne recouvre pas le dispositif de déchargement (26).

3. Dispositif de déchargement (26) selon la revendication 1 ou 2, **caractérisé en ce que** le boîtier du dispositif de mesure (46) peut être fixé dans le couvercle (56).

4. Dispositif de déchargement (26) selon l'une quelconque des revendications 1 à 3, **caractérisé en ce que** le couvercle (56) est articulé de manière pivotante contre le dispositif de déchargement (26).

5. Dispositif de déchargement (26) selon l'une quelconque des revendications 1 à 4, **caractérisé en ce qu'**il est muni d'une ouverture, à travers laquelle le dispositif de mesure (46) peut coopérer avec la récolte transportée dans le dispositif de déchargement (26), et **en ce qu'**une vitre (66) est montée dans l'ouverture.

6. Dispositif de déchargement (26) selon la revendication 5, **caractérisé en ce qu'**une douille (64) est agencée entre le dispositif de déchargement (26) et la vitre (66).

7. Dispositif de déchargement (26) selon la revendication 5 ou 6, **caractérisé en ce qu'**un joint d'étanchéité (74) est prévu entre le boîtier (60) du dispositif de mesure (46) et la douille (64).

8. Dispositif de déchargement (26) selon la revendication 6 ou 7, **caractérisé en ce que** la douille (64) est amovible.

9. Dispositif de déchargement (26) selon l'une quelconque des revendications précédentes, **caractérisé en ce que** la position du boîtier (60) du dispositif de mesure (46) dans le système de fixation (52) est réglable.

10. Dispositif de déchargement (26) selon l'une quelconque des revendications précédentes, **caractérisé en ce que** le dispositif de mesure (46) fonctionne par voie optique.
